(19) Europäisches Patentamt
European Patent Office
Office européen des brevets

(11) **EP 4 172 570 B1**

(12) **FASCICULE DE BREVET EUROPEEN**

(45) Date de publication et mention de la délivrance du brevet:
**06.08.2025 Bulletin 2025/32**

(21) Numéro de dépôt: **21739168.9**

(22) Date de dépôt: **15.06.2021**

(51) Classification Internationale des Brevets (IPC):
**G01D 5/353** (2006.01)   **G01K 11/3206** (2021.01)
**G01L 1/24** (2006.01)

(52) Classification Coopérative des Brevets (CPC):
**G01D 5/35316; G01K 11/3206; G01L 1/246**

(86) Numéro de dépôt international:
**PCT/FR2021/051077**

(87) Numéro de publication internationale:
**WO 2021/260294 (30.12.2021 Gazette 2021/52)**

(54) **PROCEDE ET DISPOSITIF DE MESURE PHYSIQUE DE CONDITIONS ENVIRONNEMENTALES ET OPÉRATIONNELLES**

VERFAHREN UND VORRICHTUNG ZUR PHYSIKALISCHEN MESSUNG VON UMGEBUNGS- UND BETRIEBSBEDINGUNGEN

METHOD AND DEVICE FOR PHYSICALLY MEASURING ENVIRONMENTAL AND OPERATIONAL CONDITIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2020 FR 2006669**

(43) Date de publication de la demande:
**03.05.2023 Bulletin 2023/18**

(73) Titulaire: **SAFRAN**
**75015 Paris (FR)**

(72) Inventeurs:
• **HADJRIA, Rafik**
**77550 Moissy-Cramayel (FR)**
• **D'ALMEIDA, Oscar**
**77550 Moissy-Cramayel (FR)**
• **PHAN HUY, Minh Chau**
**77550 Moissy-Cramayel (FR)**
• **SALHI, Nassim**
**77550 Moissy-Cramayel (FR)**

(74) Mandataire: **Ernest Gutmann - Yves Plasseraud S.A.S.**
**C/o Plasseraud IP**
**104 Rue de Richelieu**
**CS 92104**
**75080 Paris Cedex 02 (FR)**

(56) Documents cités:
**EP-A1- 3 062 078     EP-A1- 3 066 423**

• **MARS JEROME I ET AL: "Source separation and distributed sensing: The key for an efficient monitoring", 2013 5TH IEEE INTERNATIONAL WORKSHOP ON COMPUTATIONAL ADVANCES IN MULTI-SENSOR ADAPTIVE PROCESSING (CAMSAP), IEEE, 15 December 2013 (2013-12-15), pages 264 - 267, XP032553037, DOI: 10.1109/CAMSAP.2013.6714058**

**Description**

**Domaine technique**

L'invention relève du domaine de mesure physique de conditions environnementales et opérationnelles notamment dans le domaine de la surveillance de la température et de la déformation de pièces telles que des pièces structurales aéronautiques en utilisant une technologie à base de fibre optique. L'invention concerne en particulier la mesure simultanée de la température et de la déformation de ces pièces.

**Technique antérieure**

Il est connu de réaliser des mesures de température ou de déformation au moyen de dispositifs à fibre optique et réseaux de Bragg. Ces mesures utilisent soit deux lignes de fibre optique collées sur la même zone structurale ou pièce, chaque ligne comportant un réseau de Bragg. Pour ces mesures, soit les réseaux de Bragg sont spatialement proches l'un de l'autre de manière à ce que cette proximité permette aux deux réseaux de Bragg de ressentir la même variation de température et la même déformation, soit on utilise une fibre équipée de deux réseaux de Bragg l'un pour détecter la température l'autre les déformations mais dans ce cas les réseaux de Bragg sont distants l'un de l'autre et ne mesurent pas exactement les variations au même endroit.

Notamment pour mesurer des quantités physiques telles que la déformation et la température via la technologie fibre optique à base de réseaux de Bragg, il est traditionnellement prévu d'avoir deux lignes de fibre. Une possibilité est d'avoir une première fibre qui comporte un réseau de Bragg fixé à une structure hôte et est sensible à la déformation et à la température et une seconde fibre qui comporte un réseau de Bragg non-fixé à la structure hôte. Dans ce dernier cas, la seconde fibre peut être glissée dans un capillaire lui-même fixé sur la structure hôte et sensible à la température. Les deux fibres équipées chacune de son réseau permettent de discriminer l'effet de la température et de la déformation au niveau de la première fibre.

Dans le cas d'un maillage M, une fibre comportera une pluralité M de réseaux de Bragg et sera sensible à la déformation aux M points du maillage alors que l'autre comportera une pluralité N de réseaux de Bragg et sera sensible à la température aux N points du maillage, M pouvant être égal à N.

Un autre exemple de dispositif comportant deux fibres chacune équipée d'un réseau est par exemple connu du document US 2014326078 A1. Dans ce document les fibres sont torsadées et les réseaux sont disposés à proximité l'un de l'autre. Dans ce cas, le nombre de réseaux est multiplié par deux dans le cas d'une utilisation pour le maillage d'une pièce.

Des dispositifs à une seule fibre existent comme décrit dans le document « Implementation of blind source separation for optical fiber sensing » Qiang Li, Zhi Wang, Zejia Huang, Kaili Guo, and Lanlan Liu, Optical Society of America APPLIED OPTICS Vol. 53, No. 9, 20 March 2014.

Dans ladite publication, les outils de séparation de sources sont définis dans le domaine temporel afin de discriminer la mesure de température et de la déformation en utilisant une seule ligne de fibre optique ayant deux réseaux de Bragg inscrits. Toutefois les mesures de température et de déformation ne se font pas au même endroit et perdent en précision.

Le document EP 3 062 078 A1 concerne un système de mesure pour diagnostique biologique comportant une fibre optique avec réseau de Bragg utilisant une fréquence d'interrogation unique.

Le document MARS JEROME I ET AL: "Source separation and distributed sensing: The key for an efficient monitoring", 2013 5TH IEEE INTERNATIONAL WORKSHOP ON COMPUTATIONAL ADVANCES IN MULTI-SENSOR ADAPTIVE PROCESSING (CAMSAP), IEEE, 15 décembre 2013 (2013-12-15), pages 264-267, XP032553037, DOi: 10.1109/CAMSAP.2013.6714058 concerne une amélioration de précision de mesure à partir d'une fibre optique par un procédé de séparation de sources à partir de lumière rétrodiffusée et de traitement du signal au niveau d'un interrogateur détectant une fibre optique comme un réseau de capteurs individuels.

Le document WO2015/067292 A1 concerne un dispositif capteur Brillouin distribué.

**Problème technique**

Il est souhaitable de réduire le nombre de fibres utilisées notamment dans des structures complexes à surveiller et de pouvoir utiliser une seule fibre combinant des mesures de température et de déformation en des mêmes points sans non plus accroître le nombre de réseaux de Bragg portés par la fibre dans le cas d'un maillage.

**Exposé de l'invention**

Dans cette optique, la présente demande propose un procédé de mesure de température et de déformation localisées.

Pour ce faire, la présente invention concerne un procédé de mesure de température et de déformation d'une pièce ou structure à partir d'une seule ligne de fibre optique ayant un seul réseau de Bragg, comportant les étapes suivantes :

- une interrogation de la fibre optique basée sur deux fréquences d'échantillonnage; l'une étant une fréquence basse ($f_{sl}$) et l'autre étant une fréquence haute ($f_{sh}$), ladite fréquence basse $f_{sl}$ étant adaptée pour capter une dynamique lente correspondant à la variation de température, ladite fréquence haute $f_{sh}$ étant adaptée pour capter une dynamique rapide correspondant à la dynamique vibratoire ;

- Une brique algorithmique basée sur une technique de séparation aveugle de sources (SAS), comportant une analyse fréquentielle comportant une transformée de Fourier, une analyse multivariée et les Statistiques d'Ordre Supérieur.

Ce procédé permet d'utiliser une seule fibre et un seul réseau tout en réalisant les mesures au même endroit pour une mesure simple et de réduire le nombre de fibres et de réseaux de Bragg tout en réalisant les mesures aux mêmes endroits lorsqu'une pièce est en cours d'utilisation/opération pour obtenir une cartographie des températures et des déformations d'une pièce ou d'une structure

Selon un mode de réalisation avantageux, la fréquence haute $f_{sh}$ est un multiple de la fréquence basse $f_{sl}$.

La fréquence haute $f_{sh}$ peut être comprise entre quelques kHz et quelques centaines de kHz selon le type de vibrations ou de déformations à mesurer.

La fréquence basse $f_{sl}$ peut être comprise entre 1 Hz et $f_{sh}/10$ ce qui est notamment adapté pour mesurer des variations de température.

Selon un mode de réalisation particulier, la fréquence haute $f_{sh}$ est un multiple de la fréquence basse $f_{sl}$ ce qui simplifie les calculs.

Le procédé peut en outre comporter un algorithme d'optimisation dit de "point fixe".

Le procédé comporte avantageusement un retour dans le domaine temporel par le biais d'une transformée de Fourier inverse pour obtenir la ou les sources estimées.

La présente demande concerne en outre un programme informatique comportant des instructions pour la mise en œuvre du procédé de la demande selon l'une lorsque ce programme est exécuté par un processeur et un support d'enregistrement non transitoire lisible par un ordinateur sur lequel est enregistré un programme pour la mise en œuvre du procédé de la demande lorsque ce programme est exécuté par un processeur.

**Brève description des dessins**

D'autres caractéristiques, détails et avantages de l'invention apparaîtront à la lecture de la description détaillée ci-après, et à l'analyse des dessins annexés, sur lesquels :

[Fig. 1] représente schématiquement une fibre optique pourvue d'un réseau de Bragg ;

[Fig. 2] schématise une problématique de séparation aveugle de sources ;

[Fig. 3] schématise des étapes de procédé de la présente demande ;

**Description des modes de réalisation**

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

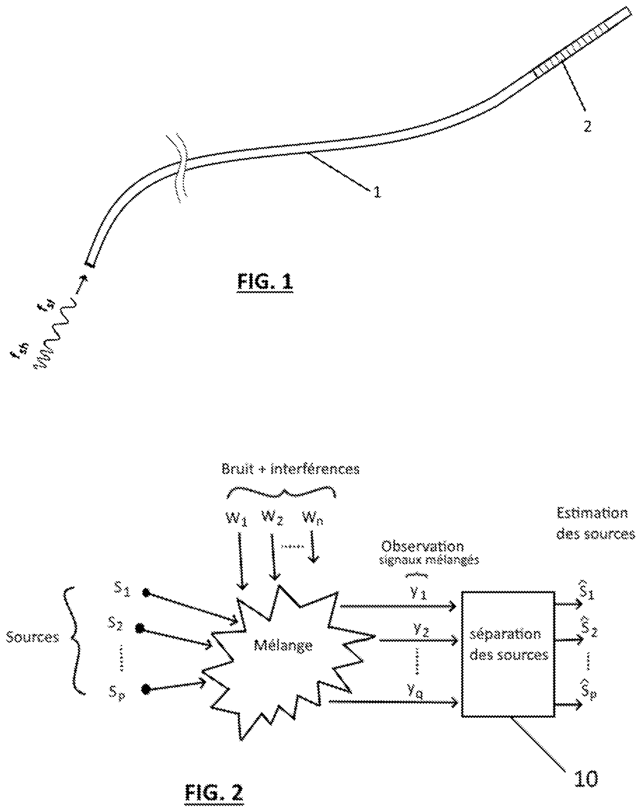

La figure 1 représente schématiquement une fibre optique 1 pourvue d'un réseau de Bragg 2.

Lorsqu'un réseau de Bragg (Fiber Bragg Grating-FBG en anglais) est inscrit sur une ligne optique (FO), collée sur une zone structurale/pièce, il permet à la fois de capter les sollicitations de la température (condition environnementale) et de la déformation (condition opérationnelle). Toutefois, il n'est pas possible de discriminer l'influence de la température de l'influence de la déformation sans mesure additionnelle.

Dans l'art antérieur, dans le but de discriminer/mesurer les contributions desdites quantités physiques, il s'avère nécessaire d'avoir deux lignes de FO collées sur la même zone structurale/pièce, ayant chacune un réseau de Bragg proches spatialement l'un de l'autre de manière à ce que cette proximité permettrait aux deux réseaux de Bragg de ressentir la même variation de température et la même déformation :

Soit :

Deux lignes de FO collées sur une zone structurale, ayant chacune un réseau de Bragg inscrit,$\lambda_{B_1}$ ,$\lambda_{B_2}$, les longueurs d'ondes caractéristiques desdits réseaux de Bragg.

Lorsque la zone structurale/pièce est soumise simultanément à une variation de la température (condition environnementale), de l'état contrainte et dynamique vibratoire (condition opérationnelle), l'interaction opto-thermomécanique s'écrit de la façon suivante:

[Math. 1]

$$\begin{cases} \Delta\lambda_{B_1} = K_{\varepsilon_1}\varepsilon + K_{T1}\Delta T \\ \Delta\lambda_{B_2} = K_{\varepsilon_2}\varepsilon + K_{T2}\Delta T \end{cases}$$

[Math. 2]

$$\begin{cases} K_{\varepsilon_1} = (1-\rho)\lambda_{B_1}, K_{T_1} = (\alpha+\eta)\lambda_{B_1} \\ K_{\varepsilon_2} = (1-\rho)\lambda_{B_2}, K_{T_1} = (\alpha+\eta)\lambda_{B_2} \end{cases}$$

où :

$\Delta\lambda_{B_1}$, $\Delta\lambda_{B_2}$ représentent la variation de la longueur d'onde des deux réseaux de Bragg $\lambda_{B_1}$, $\lambda_{B_2}$, due aux conditions environnementale et opérationnelle,
$\varepsilon$, $\Delta T$ représentent respectivement la déformation (allongement relatif) et la variation de la température,
$\alpha$, $\eta$ et $\rho$ sont respectivement les coefficients de dilatation thermique, de thermo-optique et de photoélasticité, intrinsèques à la fibre,
$\{K_{\varepsilon_1}, K_{\varepsilon_2}\}$ sont les paramètres de sensibilités à la déformation des deux réseaux de Bragg,
$(K_{T1}, K_{T2}\}$ sont les paramètres de sensibilités à la température des deux réseaux de Bragg.

Sous forme matricielle, l'équation (1) s'écrit de la façon suivante :

[Math. 3]

$$\begin{bmatrix} \Delta\lambda_{B_1} \\ \Delta\lambda_{B_2} \end{bmatrix} = \underbrace{\begin{bmatrix} K_{\varepsilon_1} & K_{T1} \\ K_{\varepsilon_2} & K_{T2} \end{bmatrix}}_{T} \begin{bmatrix} \varepsilon \\ \Delta T \end{bmatrix}$$

où la matrice T est appelée "wavelength shift matrix"

Connaissant la mesure émanant des 2 réseaux de Bragg, i.e. $\Delta\lambda_{B_1}$, $\Delta\lambda_{B_2}$, et des paramètres de sensibilités $\{K_{\varepsilon_1}, K_{\varepsilon_2}, K_{T1}, K_{T2}\}$, les quantités physiques $\varepsilon$ et $\Delta T$ peuvent être calculées en inversant la matrice T :

[Math. 4]

$$\begin{bmatrix} \varepsilon \\ \Delta T \end{bmatrix} = \frac{1}{K_{\varepsilon_1} K_{T2} - K_{T1} K_{\varepsilon_2}} \begin{bmatrix} K_{T2} & K_{T1} \\ -K_{\varepsilon_2} & K_{\varepsilon_1} \end{bmatrix} \begin{bmatrix} \Delta\lambda_{B_1} \\ \Delta\lambda_{B_2} \end{bmatrix}$$

Cependant, lorsque les deux réseaux de Bragg sont proches spatialement l'un de l'autre, les paramètres de sensibilités à la déformation et à la température sont presque égaux : $K_{\varepsilon_1} \approx K_{\varepsilon_2}$ et $K_{T1} \approx K_{T2}$. Cela conduirait à une non-solution de l'équation (4).

Ceci conduit à devoir écarter les réseaux ou à rendre l'une des fibres et son réseau insensible à l'un des paramètres à mesurer ce qui complique encore le positionnement des fibres.

La présente demande a pour but de s'affranchir d'une telle complexité.

Pour ce faire, la présente demande propose de mesurer simultanément la température et la déformation d'une zone structurale/pièce à partir d'une seule ligne de fibre optique ayant un seul réseau de Bragg.

L'invention fait appel en premier lieu à une brique de mesure d'acquisition de données (interrogateur optronique). Pendant cette acquisition, l'interrogateur mesure la longueur d'onde associée à la lumière réfléchie par la fibre optique à travers les réseaux de Bragg et la converti en une unité d'ingénierie (par exemple en Volt) afin qu'elle puisse être exploitée par une unité de traitement. Ladite brique est interrogée successivement selon deux fréquences d'échantillonnage: l'une étant une fréquence basse (notée $f_{sl}$) et l'autre étant une fréquence haute (notée $f_{sh}$), comme représenté en figure 1.

Selon l'invention, la fréquence basse $f_{sl}$ est adaptée pour capter une dynamique lente ce qui va mettre en valeur la variation de température qui est une donnée variant relativement lentement par rapport aux dynamiques vibratoires mécaniques alors que la fréquence haute $f_{sh}$ est adaptée pour capter une dynamique plus rapide mettant en valeur la dynamique vibratoire et donc la déformation. Il convient aussi de noter que $f_{sh}$ est un multiple de $f_{sl}$ afin d'avoir le même nombre d'échantillons temporels en jouant aussi sur les durées d'acquisition. Cette approche permettrait d'éviter des erreurs de calcul dans la partie liée à l'analyse multivariée. A titre indicatif, $f_{sh}$ peut être comprise entre quelques kHz et quelques centaines de kHz. Quant à $f_{sl}$ , elle peut être comprise entre 1 Hz et $f_{sh}/10$ Le choix de ces fréquences peut dépendre de l'application choisie et de la différence de dynamique entre la variation de température et la fréquence vibratoire, les fréquences étant choisies pour être au moins le double de la fréquence de variation maximale à mesurer.

L'invention fait appel en second lieu à une brique algorithmique basée sur une technique de séparation aveugle de sources (SAS), dont les outils font appels à l'analyse fréquentielle, l'analyse multivariée et les Statistiques d'Ordre Supérieur afin de tirer profit de l'hypothèse d'indépendance statistique associée aux informations physiques de la température et la déformation.

Les Statistiques d'Ordre Supérieur (SOS) concernent les moments et cumulants d'ordre supérieur à 2. Elles sont utilisées en complément aux statistiques d'ordre 2 et donnent une description plus complète des données et de leurs propriétés.

La combinaison de ces briques a pour but de de séparer la mesure de variation de la température et la mesure de déformation pour discriminer l'effet de la température de l'effet de la vibration.

Reprenant l'équation matricielle définie précédemment :

[Math. 5]

$$\begin{bmatrix} \Delta\lambda_{B_1} \\ \Delta\lambda_{B_2} \end{bmatrix} = \underbrace{\begin{bmatrix} K_{\varepsilon_1} & K_{T1} \\ K_{\varepsilon_2} & K_{T2} \end{bmatrix}}_{M} \begin{bmatrix} \varepsilon \\ \Delta T \end{bmatrix}$$

D'un point de vue traitement avancé du signal, le modèle défini à l'équation (5) est un problème de séparation aveugle de sources.

Le problème scientifique de la séparation de sources consiste à extraire un ensemble de signaux non observables, dits «signaux sources», à partir d'un ensemble de signaux observables comme schématisé en figure 2 où les signaux sources $S_1$, $S_2$, ..., $S_p$ sont mélangés à des bruits ou interférences $W_1$, $W_2$, ... , $W_n$ pour donner des signaux mélangés $Y_1$, $Y_2$, ...., $Y_n$ qu'il y a lieu de traiter par un module de séparation des sources 10 pour obtenir des sources estimées $\hat{S}_1$, $\hat{S}_2$, ... , $\hat{S}_p$. Ces observations proviennent de capteurs, par exemple: des microphones, des antennes, des caméras, des transducteurs piézoélectriques, etc... Dans le cadre de la présente demande, les signaux sources représentent la variation de la température et la déformation de la zone structurale/pièce et les signaux observables émanent d'un seul réseau de Bragg inscrit sur une ligne de FO, interrogé successivement avec une fréquence d'échantillonnage basse et haute éventuellement avec le même nombre d'échantillons temporels. En tenant compte du temps discret k et de la fonction de transfert du milieu, le modèle défini à l'équation (5) est un modèle de mélange, et s'exprime selon le modèle de convolution suivant :

[Math. 6]

$$\underline{y}(k) = T(k) * \underline{s}(k)$$

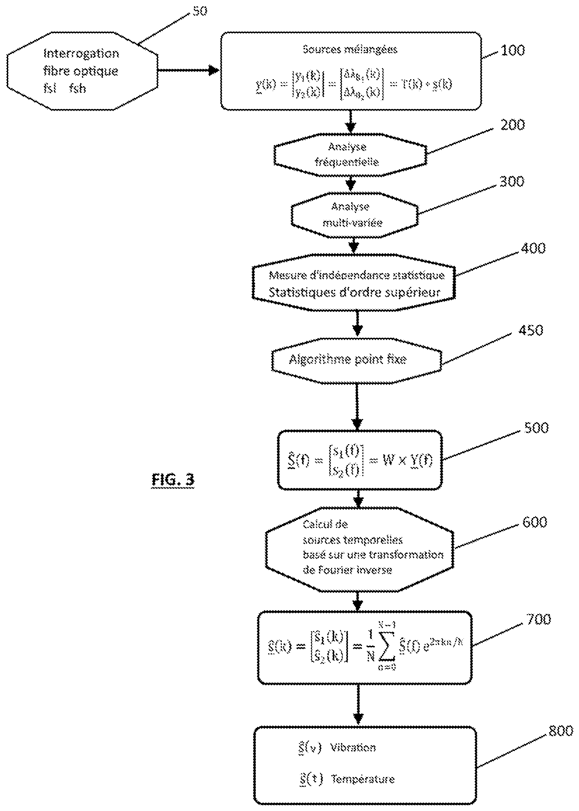

où comme représenté dans la figure 3:

[Math. 7]

$$\underline{y}(k) = \begin{bmatrix} y_1(k) \\ y_2(k) \end{bmatrix} = \begin{bmatrix} \Delta\lambda_{B_1}(k) \\ \Delta\lambda_{B_2}(k) \end{bmatrix}$$

est le vecteur 100 de mesures observable à l'instant k émanant du réseau de Bragg, dont l'interrogation a été faite selon

$$\underline{s}(k) = \begin{bmatrix} s_1(k) \\ s_2(k) \end{bmatrix}$$

deux fréquences d'échantillonnage : basse $f_{sl}$ et haute $f_{sh}$, est le vecteur de sources à l'instant k, reflétant la mesure émanant de la variation de la température et de la déformation.

T(k) est la matrice de mélange reflétant la réponse impulsionnelle du milieu, *i.e.* fonction de transfert de la pièce structurale à surveiller.

Dans le but de résoudre le problème de séparation : estimer le vecteur de sources $\underline{s}$ connaissant uniquement le vecteur de mesures $\underline{y}$, nous définissons les étapes suivantes reprises en figure 3 qui représente un exemple de procédé de la demande à partir de sources mélangées 100.

Les différentes étapes nécessaires pour résoudre le problème de séparation de sources sont :

(*i*) le passage des signaux mesurés du domaine temporel au domaine fréquentiel ;
(*ii*) l'utilisation d'un outil des Statistiques d'Ordre Supérieur afin de tirer profit de l'indépendance des sources et poser la fonction objective et un algorithme d'optimisation basé sur le "point fixe" afin trouver une matrice de mélange permettant se séparer les 2 signaux sources dans le domaine fréquentiel ;
(*iii*) le passage des signaux sources dans le domaine temporel par le biais de la transformée de Fourier inverse pour obtenir les sources estimées $\underline{\hat{s}}(k)$.

Etape N°1 : Passage dans le domaine fréquentiel afin de transformer le produit de convolution en une multiplication par une transformée de Fourier 200:

[Math. 8]

$$\underline{Y}(f) = T \times \underline{S}(f)$$

où :

$\underline{Y}(f) \in \mathbb{C}$ est la transformée de Fourier du vecteur de mesures (vecteur complexe),

$\underline{S}(f) \in \mathbb{C}$ est la transformée de Fourier du vecteur de sources que nous cherchons à déterminer,

T est la matrice de mélange.

Etape N°2 :

Utilisation des outils suivants selon trois sous-étapes:

- Algèbre linéaire 300 appliquée aux nombres complexes,
- Statistiques d'Ordre Supérieur afin de mettre en œuvre l'hypothèse de l'indépendance statistique des sources 400,
- algorithme d'optimisation dit de "point fixe" 450 pour trouver la matrice de séparation (notée W).

Ces sous-étapes permettent d'estimer le vecteur de sources dans le domaine fréquentiel (notée $\underline{\hat{S}}(f)$) 500:

[Math. 9]

$$\underline{\hat{S}}(f) = \begin{bmatrix} s_1(f) \\ s_2(f) \end{bmatrix} = W \times \underline{Y}(f)$$

Reprenant le modèle de mélange dans le domaine fréquentiel :

$$[\text{Math. 11}]$$

$$\underline{Y}(f) = T \times \underline{S}(f)$$

Le modèle de séparation est défini par :

$$[\text{Math. 12}]$$

$$\underline{S}(f) = W\underline{Y}(f)$$

où W est la matrice de séparation.

On définit une fonction objective notée $J_G(w)$ basée sur les Statistiques d'Ordre Supérieur :

$$[\text{Math. 13}]$$

$$J_G(w) = E\{G(|w^H y|^2)\}$$

où :

E est l'opérateur d'espérance mathématique.

Trouver la matrice W en maximisant la fonction objective :

maximise $\sum_{j=}^{n} J_G\left(w_j\right)$ par rapport à $w_j$

sous contrainte $E\{(w_k{}^H x)(w_j{}^H x)^*\} = \delta_{jk}$

où:

$$[\text{Math. 14}]$$

$$\delta_{jk} = \begin{cases} 1 \text{ pour } j = k \\ 0 \text{ pour } j \neq k \end{cases}$$

Etape n° 3 :

Passage dans le domaine temporel par le biais de la transformée de Fourier inverse 600 pour obtenir les sources estimées $\underline{\hat{s}}(k)$ 700 :

$$[\text{Math. 10}]$$

$$\underline{\hat{s}}(k) = \begin{bmatrix} \hat{s}_1(k) \\ \hat{s}_2(k) \end{bmatrix} = \frac{1}{N} \sum_{n=0}^{N-1} \underline{\hat{S}}(f) \, e^{2\pi k n/N}$$

où :

N est le nombre de points fréquentiels utilisés dans le calcul de la transformée de Fourier inverse : $N = T \times f_{sh}$, avec T représente la durée d'acquisition.

n est l'indice de fréquence.

Ceci permet ainsi de trouver les estimations 800.de la déformation $\underline{\hat{s}}(v)$ et de la température $\underline{\hat{s}}(t)$ avec les indices de fréquence correspondants.

## Application industrielle

L'invention peut trouver à s'appliquer notamment à la surveillance de pièces ou de structures d'aéronefs, de lanceurs spatiaux ou autres systèmes où la température et les vibrations ont une influence sur le fonctionnement des systèmes.

## Revendications

1.   Procédé de mesure de température et de déformation d'une pièce ou structure à partir d'une seule ligne de fibre optique ayant un seul réseau de Bragg, **caractérisé en ce qu'**il comporte les étapes suivantes :

    a. - une interrogation (50) de la fibre optique basée sur deux fréquences d'échantillonnage; l'une étant une fréquence basse ($f_{sl}$) et l'autre étant une fréquence haute ($f_{sh}$), ladite fréquence basse $f_{sl}$ étant adaptée pour capter une dynamique lente correspondant à la variation de température, ladite fréquence haute $f_{sh}$ étant adaptée pour capter une dynamique rapide correspondant à la dynamique vibratoire ;
    b. - une brique algorithmique basée sur une technique de séparation aveugle de sources (SAS), comportant une analyse fréquentielle comportant une transformée de Fourier (200), une analyse multivariée (300), les Statistiques d'Ordre Supérieur (400) ;
    c. - un retour dans le domaine temporel par le biais d'une transformée de Fourier inverse (600).

2.   Procédé de mesure selon la revendication 1, pour lequel la fréquence haute $f_{sh}$ est un multiple de la fréquence basse $f_{sl}$.

3.   Procédé de mesure selon la revendication 1 ou 2, pour lequel la fréquence haute $f_{sh}$ est comprise entre quelques kHz et quelques centaines de kHz.

4.   Procédé de mesure selon la revendication 1, 2 ou 3, pour lequel la fréquence basse $f_{sl}$, est comprise entre 1 Hz et $f_{sh}$/10.

5.   Procédé de mesure selon l'une quelconque des revendications précédentes, pour lequel la fréquence haute $f_{sh}$ est un multiple de la fréquence basse $f_{sl}$.

6.   Procédé de mesure selon l'une quelconque des revendications précédentes, comportant un algorithme d'optimisation dit de "point fixe" (450).

7.   Programme informatique comportant des instructions pour la mise en œuvre du procédé selon l'une des revendications 1 à 6 lorsque ce programme est exécuté par un processeur.

8.   Support d'enregistrement non transitoire lisible par un ordinateur sur lequel est enregistré un programme selon la revendication 7.

## Patentansprüche

1.   Verfahren zur Messung der Temperatur und der Verformung eines Bauteils oder einer Struktur anhand einer einzelnen optischen Faserleitung mit einem einzelnen Bragg-Gitter,
    **dadurch gekennzeichnet, dass** es die folgenden Schritte umfasst:

    a. - Abfragen (50) der optischen Faser auf der Grundlage von zwei Abtastfrequenzen, von denen die eine eine niedrige Frequenz ($f_{sl}$) und die andere eine hohe Frequenz ($f_{sh}$) ist, wobei die niedrige Frequenz $f_{sl}$ dazu geeignet ist, eine langsame Dynamik entsprechend der Temperaturänderung zu erfassen, und die hohe Frequenz $f_{sh}$ dazu geeignet ist, eine schnelle Dynamik entsprechend der Schwingungsdynamik zu erfassen;
    b. - mit einem algorithmischen Baustein, der auf einer Technik der Blind-Source-Separation (BSS) basiert und eine Frequenzanalyse mit FourierTransformation (200), multivariater Analyse (300) und Statistik höherer Ordnung (400) umfasst;
c. - eine Rückkehr in den Zeitbereich mittels einer inversen FourierTransformation (600).

**2.** Messverfahren nach Anspruch 1, wobei die hohe Frequenz $f_{sh}$ ein Vielfaches der niedrigen Frequenz $f_{sl}$ ist.

**3.** Messverfahren nach Anspruch 1 oder 2, wobei die hohe Frequenz $f_{sh}$ zwischen einigen kHz und einigen hundert kHz liegt.

**4.** Messverfahren nach Anspruch 1, 2 oder 3, wobei die niedrige Frequenz $f_{sl}$ zwischen 1 Hz und $f_{sh}/10$ liegt.

**5.** Messverfahren nach einem der vorhergehenden Ansprüche, wobei die hohe Frequenz $f_{sh}$ ein Vielfaches der niedrigen Frequenz $f_{sl}$ ist.

**6.** Messverfahren nach einem der vorhergehenden Ansprüche, umfassend einen sogenannten "Fixpunkt"-Optimierungsalgorithmus (450).

**7.** Computerprogramm mit Anweisungen zur Durchführung des Verfahrens nach einem der Ansprüche 1 bis 6, wenn dieses Programm von einem Prozessor ausgeführt wird.

**8.** Computerlesbares, nicht transitorisches Aufzeichnungsmedium, auf dem ein Programm nach Anspruch 7 aufgezeichnet ist.

**Claims**

**1.** A method for measuring temperature and deformation of a part or structure on the basis of a single line of optical fiber having a single Bragg grating,
**characterized in that** it comprises the following steps:

   a. - interrogating (50) the optical fiber based on two sampling frequencies; one being a low frequency ($f_{sl}$) and the other being a high frequency ($f_{sh}$), said low frequency $f_{sl}$ being suitable for sensing a slow rate of change corresponding to the temperature variation, said high frequency $f_{sh}$ being suitable for sensing a fast rate of change corresponding to vibrations;
   b. - implementing an algorithmic block based on a blind-source-separation (BSS) technique, comprising a frequency analysis (200), a multivariate analysis (300), higher-order statistics (400);
   c. - returning to the time domain via an inverse Fourier transform (600).

**2.** The measurement method according to claim 1, for which the high frequency $f_{sh}$ is a multiple of the low frequency $f_{sl}$.

**3.** The measurement method according to claim 1 or 2, for which the high frequency $f_{sh}$ is comprised between a few kHz and a few hundred kHz.

**4.** The measurement method according to claim 1, 2 or 3, for which the low frequency $f_{sl}$, is comprised between 1 Hz and $f_{sh}/10$.

**5.** The measurement method according to any one of the preceding claims, for which the high frequency $f_{sh}$ is a multiple of the low frequency $f_{sl}$.

**6.** The measurement method according to any one of the preceding claims, comprising an optimization algorithm called "fixed point" optimization algorithm (450).

**7.** A computer program comprising instructions for implementing the method according to one of claims 1 to 6 when this program is executed by a processor.

**8.** A computer-readable non-transitory recording medium on which is recorded a program according to claim 7.

**FIG. 1**

**FIG. 2**

10

**FIG. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014326078 A1
- EP 3062078 A1
- WO 2015067292 A1

**Littérature non-brevet citée dans la description**

- Implementation of blind source separation for optical fiber sensing. **QIANG LI** ; **ZHI WANG** ; **ZEJIA HUANG** ; **KAILI GUO** ; **LANLAN LIU**. APPLIED OPTICS. Optical Society of America, 20 March 2014, vol. 53

- ource separation and distributed sensing: The key for an efficient monitoring. **MARS JEROME I et al.** 2013 5TH IEEE INTERNATIONAL WORKSHOP ON COMPUTATIONAL ADVANCES IN MULTI-SENSOR ADAPTIVE PROCESSING (CAMSAP). IEEE, 15 December 2013, 264-267